# FASCICULE DE BREVET EUROPEEN

(11) **EP 1 898 563 B1**
(45) Date de publication et mention de la délivrance du brevet: **24.11.2010**
(21) Numéro de dépôt: 07115608.7
(22) Date de dépôt: 04.09.2007
(51) Int. Cl.: H04L 12/28

(54) **Procédé et système de commande à distance d'équipements domestiques**
Fernbedienverfahren und entsprechendes System für Hausgeräte
Method and system for remotely controlling domestic equipment

(30) Priorité: 07.09.2006 FR 0653604
(43) Date de publication de la demande: 12.03.2008
(73) Titulaire: FRANCE TELECOM, 75015 Paris (FR)
(72) Inventeur: Sibileau, Nathalie, 06560 Valbonne (FR)
(74) Mandataire: David, Alain

(56) Documents cités:
- WO-A-2004/081713
- WO-A-2005/112365
- DE-A1- 4 226 053
- US-A1- 2005 242 970

## Description

### Domaine de l'invention et art antérieur

La présente invention se rapporte au domaine des services à la personne via les réseaux de télécommunications et elle concerne plus particulièrement un procédé et un système de commande à distance d'équipements.

La commande à distance d'équipements domotiques via les réseaux mobiles de télécommunications est maintenant bien connue. Il est en effet possible à un utilisateur par exemple de commander la mise en marche de certains équipements électriques de sa maison via une centrale de commande accessible depuis un téléphone portable.

De même, les techniques de communication machine à machine qui permettent à un serveur applicatif de communiquer avec une machine ou à des machines de communiquer entre elles par l'intermédiaire de commandes de type M2M (Machine To Machine) sont également bien connues. Ces techniques sont toutefois essentiellement mises en oeuvre dans des applications industrielles et sont relativement complexes à mettre en oeuvre.

Or, il y aurait un intérêt à fournir une solution simple de commande à distance d'équipements qui soit applicable à un environnement domestique.

### Objet et description succincte de l'invention

La présente invention se propose donc de répondre à cet intérêt en permettant d'assurer simplement la commande à distance d'équipements domotiques.

Selon l'invention, le procédé de commande à distance d'au moins un équipement, comporte les étapes suivantes :
- détection de l'arrivée ou du départ d'un terminal mobile de communication d'un utilisateur dans un périmètre de détection radio d'un dispositif de commande,
- envoi par le dispositif de commande d'une information pour informer un dispositif de gestion de ladite détection,
- réception en retour par le dispositif de commande d'au moins une commande à envoyer et d'au moins un identifiant d'un équipement auquel ladite au moins une commande est à envoyer, et
- envoi par le dispositif de commande de ladite au moins une commande à au moins un équipement identifié par ledit au moins un identifiant.

Par ce procédé simple, reposant sur la seule détection de l'entrée ou la sortie du terminal mobile du périmètre radio du dispositif de commande, il est possible de commander toute une série d'équipements. Ainsi, l'utilisateur n'a aucune action à effectuer pour que les commandes soient déclenchées.

En outre, le dispositif de commande est un dispositif polyvalent, mettant en oeuvre trois modes de communication: il accède au réseau de télécommunication via lequel il communique avec le dispositif de gestion, il fait office de borne de détection radio pour un réseau radio local et est apte à émettre des commandes pour les équipements. De ce fait, il est possible de combiner l'utilisation de ces trois modes de communication pour la mise en place d'un service de commande automatisée d'équipement au moyen d'un dispositif de gestion distant accessible via un réseau de télécommunication.

Selon l'équipement ou le mode de réalisation la commande est envoyée audit équipement à travers un réseau local de télécommunication auquel est connecté ledit équipement, à travers un réseau de distribution d'électricité alimentant ledit équipement ou au moyen d'un signal de télécommande transmis indépendamment d'un réseau. Différents modes de transmission adaptés à l'équipement ou aux infrastructures de communication existantes sont ainsi utilisables pour la mise en oeuvre de l'invention. Ces modes de transmission permettent un mode de réalisation économique lorsqu'ils utilisent des moyens préexistant lors de la mise en place des équipements, comme par exemple le réseau de distribution d'électricité. Ainsi, le dispositif de commande est particulièrement adapté à la commande de tous types d'équipements domotiques.

Dans un mode de réalisation particulier du procédé selon l'invention, le message envoyé par le dispositif de commande au dispositif de gestion comprend un identifiant dudit terminal mobile.

Le fait de disposer d'un identifiant du terminal permet d'envisager une étape de vérification de l'identité de l'utilisateur porteur du terminal mobile et/ou de ne déclencher l'envoi de la commande que si une condition relative à l'identifiant du terminal est vérifiée. Cela apporte un certain degré de sécurité au procédé de commande selon l'invention.

Dans un mode de réalisation particulier du procédé selon l'invention,
- le dispositif de commande reçoit, en provenance d'un équipement, des données résultant d'une mesure ou d'une détection effectuée par l'équipement concerné, et
- le dispositif de commande transmet les données reçues au dispositif de gestion,
   ladite commande n'étant envoyée à l'équipement qu'en cas de réalisation d'au moins une condition relative aux données reçues.

Il est ainsi possible de rendre la commande adaptée à l'état de fonctionnement des équipements ou à d'autres paramètres mesurés par les équipements. Il en résulte un confort et une simplicité accrue pour l'utilisateur.

La présente invention concerne également un dispositif de commande à distance d'au moins un équipement, comportant:
- des moyens de détection de l'arrivée ou du départ d'un terminal mobile de communication d'un utilisateur dans un périmètre de détection radio du dispositif de commande,
- des moyens pour envoyer une information pour informer un dispositif de gestion de ladite détection,
- des moyens de réception pour recevoir en retour au moins une commande à envoyer et au moins un identifiant d'un équipement auquel ladite au moins une commande est à envoyer, et
- des moyens de commande pour envoyer ladite au moins une commande à au moins un équipement identifié par ledit au moins un identifiant.
   La présente invention concerne en outre un dispositif de gestion pour la commande à distance d'équipement comprenant
- des moyens pour recevoir, en provenance d'un dispositif de commande, une information relative à une détection de l'arrivée ou du départ d'un terminal mobile de communication d'un utilisateur dans un périmètre de détection radio du dispositif de commande, et
- des moyens d'émission pour envoyer au dispositif de commande au moins une commande destinée à être transmise par le dispositif de commande à l'un desdits au moins un équipement, les moyens d'émission étant conçus pour être activés suite à la réception de ladite information.

Le dispositif de gestion selon l'invention est complémentaire du dispositif de commande selon l'invention et destiné à coopérer avec le dispositif de commande selon l'invention. Les avantages énoncés plus haut pour le procédé selon l'invention sont transposables à ces deux dispositifs.

L'invention concerne ainsi un système de commande à distance d'équipement comprenant un dispositif de commande selon l'invention et un dispositif de gestion selon l'invention, ces deux dispositifs étant conçus pour communiquer l'un avec l'autre.

Enfin, l'invention se rapporte aussi à un programme informatique téléchargeable depuis un réseau de communication et/ou stocké sur un support d'enregistrement lisible par ordinateur et/ou exécutable par un microprocesseur et comprenant des instructions de code pour l'exécution des étapes du procédé précité de commande à distance d'au moins un équipement domotique et au support d'enregistrement sur lequel est stocké ce programme informatique.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique globale d'un exemple de système dans lequel est mis en oeuvre le procédé de l'invention,
- la figure 2 illustre de façon simplifiée les structures respectives d'une passerelle domestique et d'un serveur applicatif formant partie du système de la figure 1, et
- la figure 3 est un organigramme illustrant les différentes étapes du procédé mis en oeuvre dans le système de la figure 1.

### Description détaillée des modes de réalisation de l'invention

L'invention est destinée à assurer la commande à distance d'équipements domotiques depuis un dispositif de commande, le déclenchement de cette commande étant réalisé automatiquement par l'interaction du téléphone portable d'un utilisateur avec le périmètre de réception radio du dispositif de commande.

Il est connu par la demande WO 2004/81713 un système de contrôle résidentiel dont la commande est assurée à partir d'un dispositif portable.

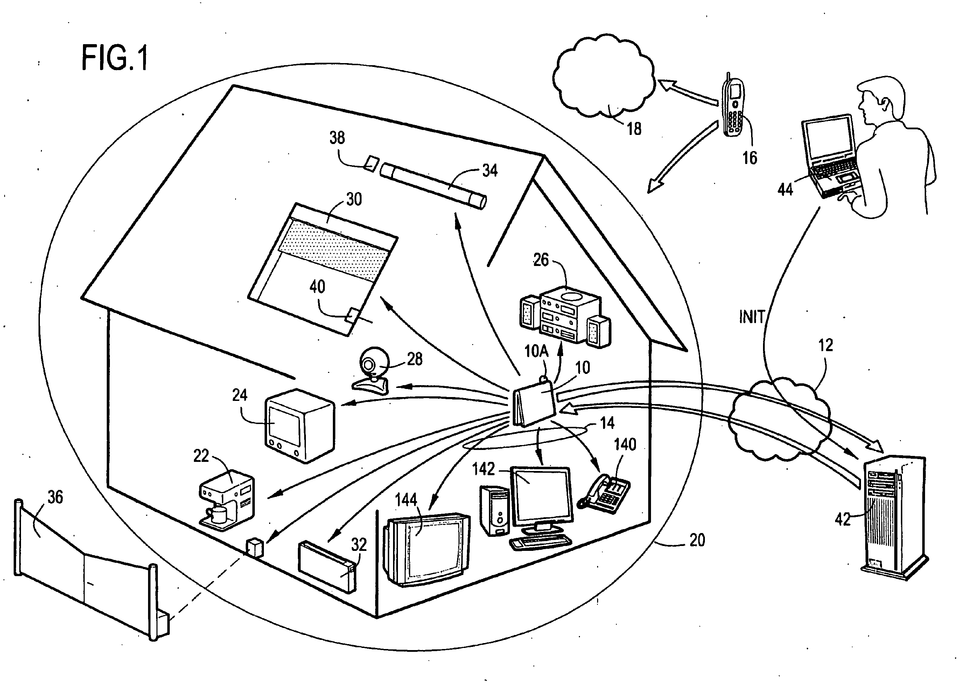

La figure 1 montre de façon schématique un exemple d'architecture de réseau informatique et de télécommunications dans laquelle est mis en oeuvre l'invention. Dans ce mode de réalisation le dispositif de commande selon l'invention fait partie d'une passerelle domestique 10.

Le coeur de cette architecture est ainsi formé par cette passerelle domestique 10 qui réalise l'interface entre un réseau 12 de communication étendu (WAN « Wide Area Network »), par exemple le réseau Internet, et un réseau local (LAN «Local Area Network »), par exemple un réseau local domestique 14. La passerelle est le point central de tous les flux: téléphone, données, sons, images fixes ou animées. De façon connue, cette passerelle domestique 10, comme la passerelle domestique dite Livebox™ de la société France Télécom™, assure le pilotage par des liaisons filaires ou radio (par exemple une liaison WiFi™) de certains équipements domestiques présents au domicile de l'utilisateur tels qu'un téléphone fixe 140, un ou plusieurs ordinateurs personnels 142, un poste de télévision 144, etc... pour la diffusion sur un ou plusieurs de ces équipements des flux médias entrants dans le réseau local domestique. Un exemple d'une telle passerelle domestique est décrit en détail dans la demande internationale WO2005/112 de la demanderesse.

Selon l'invention, la passerelle domestique est adaptée pour pouvoir détecter l'arrivée ou le départ d'un terminal mobile 16 de l'utilisateur, apte à se connecter à un réseau de téléphonie mobile 18 (par exemple un réseau GSM, GPRS, UMTS, etc...), dans un périmètre radio d'une borne radio 10A (intégrée ou non dans la passerelle domestique) formant le point d'accès radio de la passerelle domestique. Le terminal mobile (par exemple un téléphone portable, un assistant numérique personnel communicant, un smartphone, etc...) est quant à lui pourvu de moyens capables de réaliser une liaison avec la borne radio, afin de détecter la zone radio domestique 20 définie par le champ radioélectrique (par exemple le champ WiFi™) émis par cette borne radio.

Dans le cas du WiFi™, le terminal mobile est par exemple un terminal apte à commuter d'un réseau cellulaire de type GSM sur le réseau WiFi™ (ou vice-versa) afin de poursuivre une communication initialisée sur le premier réseau.

La passerelle domestique est en outre reliée via le réseau local domestique ou directement au travers d'interfaces internes particulières à divers capteurs de mesure et équipements électriques qui peuvent être aussi qualifiés de domotiques en ce sens qu'ils se rapportent en général au confort de la maison de l'utilisateur.

Comme exemple de tels équipements, on citera, sans que cette énumération soit bien entendu limitative :
- une machine à café 22,
- un four électrique 24,
- une chaîne haute fidélité 26,
- une Webcam de surveillance 28,
- un volet roulant de toiture 30,
- un radiateur électrique 32,
- un système d'éclairage 34,
- un portail de jardin 36.

Comme exemple de capteurs de mesure reliés à la passerelle domestique au moyen d'une interface correspondante, on peut citer par exemple un capteur de lumière 38 ou un capteur de température 40.

Selon l'invention, la passerelle domestique 10 est encore reliée, via le réseau de télécommunication étendu 12, à un dispositif de gestion, sous forme de serveur applicatif 42 accessible par exemple depuis un ordinateur personnel 44 de l'utilisateur et au niveau duquel sont définies des règles de gestion pour la commande de chacun des équipements domotiques, ces règles pouvant notamment prendre en compte différentes données en provenance des équipements, qu'il s'agisse de mesures ou détections effectuées par ces équipements ou d'autres évènements comme la plage horaire pendant laquelle l'entrée du terminal mobile dans le périmètre de détection radio est détectée. Les données en provenance des équipements sont notamment des données relatives à des mesures ou détections effectuées par ces équipements.

Parmi les équipements électriques, certains sont vus, à travers le réseau local, par la passerelle comme un terminal IP. Il est donc possible de leur transmettre une commande à travers le réseau local domestique dès lors que la passerelle a connaissance de l'adresse IP associée à l'équipement dans ce réseau local. Certains autres possèdent des moyens d'entrée/sortie de type infrarouge comme la chaîne haute fidélité ou le volet roulant de toiture. Certains encore possèdent des moyens de communication radio courte distance, avec protocole de communication propriétaire comme le portail de jardin, ou protocole standard Zigbee™ comme le four électrique ou le système d'éclairage. Certains enfin utilisent le réseau électrique en recevant les commandes par courant porteur CPL comme la Webcam de surveillance ou le radiateur électrique. Pour tous ces équipements non IP, des moyens de conversion pour s'affranchir de ces différents modes de transmission des commandes doivent être présents au niveau de la passerelle domestique.

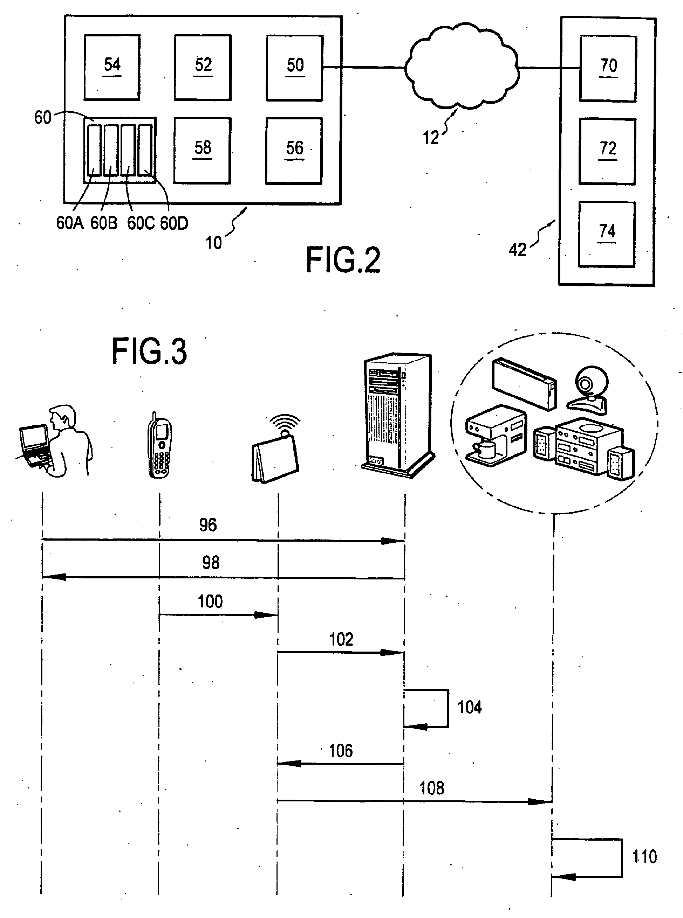

La figure 2 illustre de façon simplifiée les structures respectives de la passerelle domestique 10 et du serveur applicatif 42.

Outre, les constituants classiques d'une passerelle domestique comme un modem (ADSL, xDSL ou autre modem) 50 permettant l'accès au réseau étendu 12 ou des moyens de routage 52, la passerelle selon l'invention comporte des moyens de détection 54 pour détecter l'arrivée ou le départ du terminal mobile de communication 16 de l'utilisateur dans le périmètre de réception radio de la passerelle, des moyens d'émission/réception 56 pour informer le serveur applicatif distant de cette détection, des moyens de commande 58 pour, en réponse à une commande reçue de ce serveur applicatif sur ses moyens d'émission/réception, commander à distance un ou plusieurs équipements domotiques de l'utilisateur. Ces moyens de commande peuvent agir soit sur les moyens de routage 52 pour délivrer directement à l'équipement domotique distant une commande reçue du serveur applicatif sous un format IP et interprétable par cet équipement domotique distant soit sur des moyens de conversion 60 formés d'un ensemble d'interfaces adaptées pour convertir la commande reçue du serveur applicatif en une action directe de commande pour l'équipement domotique distant concerné. On notera que ces moyens de conversion assurent aussi la conversion des signaux en provenance des différents capteurs de mesure. Plus particulièrement, ces moyens de conversion comportent au moins une interface infrarouge 60A, une interface radio courte distance 60B et une interface CPL 60C pour entrer en communication avec les différents équipements non IP. De façon plus générale, ces moyens de conversion peuvent aussi intégrer un module de routage de commandes M2M 60D apte à communiquer via des commandes M2M avec le serveur applicatif.

Il en résulte que le format des commandes d'équipements transmises par le serveur applicatif à la passerelle domestique peut être indépendant de l'équipement à commander, la passerelle domestique mettant en oeuvre une fonction de conversion de commande, associée à l'équipement, afin de générer une commande d'équipement sous une forme compatible avec le mode de commande et de communication de l'équipement destinataire, afin d'assurer la bonne réception et interprétation de chaque commande par l'équipement destinataire.

Le serveur applicatif 42 comporte quant à lui outre des moyens conventionnels bien connus qui ne seront pas décrits comme un modem 70, des moyens d'émission/réception 72 pour recevoir une information relative à la détection de l'arrivée ou du départ du terminal mobile de communication de l'utilisateur dans le périmètre de réception radio de la passerelle domestique 10 et pour envoyer à cette passerelle domestique les signaux appropriés à la commande des équipements domotiques en fonction de règles de gestion prédéfinies et stockées dans des moyens de mémorisation 74.

On décrit maintenant en relation avec la figure 3 un procédé de commande à distance d'équipements domotiques selon l'invention qui est mis en oeuvre dans le réseau de la figure 1.

Une phase préalable d'initialisation des données relatives au contexte domotique de l'utilisateur (flèche INIT de la figure 1) est effectuée avant activation du procédé de commande à distance des équipements domotiques. Cette phase suppose le recours à un paramétrage spécifique au niveau d'un service dédié. Ce paramétrage est réalisé soit par un opérateur téléphonique selon un questionnaire renseigné par l'utilisateur au moment de la souscription au service, soit directement par l'utilisateur lui-même via un service Internet proposé par le fournisseur du service. Ce paramétrage par exemple au moyen de l'ordinateur personnel de l'utilisateur a pour effet de renseigner dans une application cliente, au niveau du serveur applicatif, des données comme:
- un identifiant de la passerelle domestique,
- un identifiant du téléphone utilisé par l'utilisateur,
- un identifiant de chaque équipement domotique pilotable par la passerelle domestique,
- la nature de l'équipement, que ce soit un capteur (interrogeable) ou un actionneur (commandable),
- le type de liaison de communication à utiliser pour cet équipement (par exemple par liaison radio, liaison par courant porteur, liaison infrarouge, liaison à travers un réseau IP, etc...).
- pour chaque équipement, la description de la commande qui lui sera envoyée lors de l'arrivée du téléphone dans le périmètre de détection radio. De façon similaire, la description de la commande associée au départ du téléphone de ce périmètre.

Une fois cette phase préalable d'initialisation effectuée (matérialisée par les étapes 96 et 98 d'échange d'informations entre l'utilisateur et le serveur applicatif illustrée à la figure 2), la passerelle domestique est en mesure de répondre à toute demande du service dédié. Pour cela, la passerelle domestique détecte dans une étape 100 l'arrivée du téléphone dans son périmètre de détection radio. Ou inversement, l'événement capté par la passerelle domestique est la sortie du téléphone de ce périmètre de détection radio.

Dans une étape 102, la passerelle domestique envoie l'information détectée à l'application distante, via son accès au réseau WAN. Elle envoie également l'identifiant du téléphone ainsi que son propre identifiant de passerelle domestique et éventuellement d'autres données.

Dans une étape 104, l'application distante reçoit ces informations. Grâce entre autres aux identifiants de téléphone et/ou de la passerelle domestique, elle accède au contexte de l'utilisateur. Ce contexte comprend d'une part les paramètres initialisés par l'utilisateur et préalablement enregistrés, et d'autre part les données mémorisées par l'application au fur et à mesure de leurs réceptions (historique des détections de présence, valeurs remontées par d'éventuels équipements situés chez l'utilisateur, etc...).

Dans une étape 106, selon le contexte, l'application prépare et envoie une (ou plusieurs) commande(s) M2M destinée(s) à la passerelle domestique. La commande comportera au moins l'identifiant de l'équipement M2M à adresser, et l'action à réaliser (par exemple ouverture du volet roulant n° 3 de la maison, mise en régime fort du radiateur électrique n°2).

Dans une étape 108, la passerelle domestique reçoit la commande M2M et transmet cette commande à l'équipement cible qui reçoit cette commande dans une étape 110 et exécute l'action demandée. En parallèle, selon le contexte de l'utilisateur géré au niveau du serveur applicatif, certaines règles de gestion peuvent aboutir à envoyer une alerte à un autre utilisateur prédéfini.

Dans une première alternative, l'envoi à l'équipement de la commande est effectué automatiquement suite à la détection du terminal. Dans une deuxième alternative l'envoi à l'équipement de la commande dépend de la réalisation d'une ou de plusieurs conditions. Ces conditions sont prédéterminées et mémorisées dans le serveur applicatif. L'utilisateur peut les personnaliser en se connectant au serveur applicatif à travers le réseau WAN 12.

Dans la deuxième alternative, lors de l'étape 104, l'application distante détermine si les conditions telle que mémorisées sont réalisées avant de prendre la décision de transmettre la ou les commandes à la passerelle.

Dans un premier cas d'exemple, les informations mémorisées relatives aux détections effectuées par la passerelle peuvent suffire à prendre la décision d'envoi de commande. Dans ce cas, l'application distante consulte les informations communiquées dans un historique de présence (arrivées ou départs, et horaires associés). Selon l'historique de ces valeurs, ou selon des critères de plages horaires seules, la commande est envoyée ou non à la machine (par exemple la commande d'ouverture des stores n'est pas envoyée si l'utilisateur arrive chez lui la nuit, entre 21h et 6h).

Dans un deuxième cas d'exemple, l'application distante détermine si une condition ou une combinaison logique de plusieurs conditions est vérifiée avant d'envoyer la commande. Ces conditions sont notamment des conditions relatives à des mesures ou détection effectuées par les équipements; par exemple "volet roulant relevé" ET "valeur remontée par un capteur de lumière inférieure à un certain seuil" (commande de l'éclairage seulement si la lumière ambiante est trop faible). Dans ce cas, le capteur de lumière est interrogé par l'application, puis l'application compare la valeur retournée par ce capteur à une valeur seuil (paramétrée au préalable). Selon le résultat de la comparaison, l'application envoie ou non la commande à l'équipement domotique distant.

Différentes solutions sont possibles pour que la passerelle domestique envoie la commande à l'équipement distant, parmi lesquelles:
a) La passerelle domestique agit en passerelle transparente, son rôle étant alors de router directement la commande à l'équipement domotique cible. Ce peut être par exemple le cas où l'équipement domotique est vu comme un terminal IP (comme les autres équipements domestiques existant sur le LAN 14 de l'utilisateur). Dans ce cas, l'application distante aura préparé sa commande dans un format d'échange de données compréhensible par cet équipement domotique, la passerelle domestique comportant alors simplement des moyens de routage.
b) La passerelle domestique agit en tant que télécommande directe d'équipements de la maison. Dans ce cas, elle convertit la commande reçue de l'application distante en un signal de télécommande (par exemple de type Infrarouge). Cela suppose que la passerelle domestique intègre une interface dédiée, capable d'émettre un tel signal.
c) La passerelle domestique utilise un module de routage de commandes M2M, situé soit à l'intérieur de la passerelle domestique, soit dans un boîtier externe dédié aux flux M2M.

Une mise en oeuvre possible des échanges d'informations entre la passerelle domestique et l'application distante est de préférence basée sur un interfaçage normalisé de type Web services, utilisant des protocoles comme SOAP/XML. Cela implique pour chacune des parties la mise à disposition de fonctionnalités qu'elle offre sous la forme d'une liste des services disponibles (Par exemple sous forme de fichiers WSDL: Web Service Description Language), avec description des attributs. Exemple de Web Service proposé par l'application distante et appelable par la passerelle domestique:
- nom du service: «Signalement de détection du téléphone »,
- liste des attributs: identification passerelle, identification téléphone, sens de détection (Entrée / Sortie), date/heure,...

Avec l'invention, au contraire des solutions existantes de domotique pilotable à distance, les commandes n'ont pas à être lancées par l'utilisateur puisque elles sont automatiquement déclenchées (sans intervention de l'utilisateur) suivant les entrées et sorties du téléphone dans et hors champ de détection radio de la passerelle domestique. L'utilisateur n'est donc pas obligé de se connecter à un site Web, d'envoyer un SMS ou de téléphoner à une centrale, pour commander son équipement domotique. Bien entendu, ce dernier type de fonctionnement (pilotable à distance par action de l'utilisateur) peut tout à fait être ajouté puisque la passerelle domestique est connectée à Internet et qu'elle est donc en mesure de recevoir les commandes par ce moyen.

On notera que si la description a été faite essentiellement en référence à une passerelle domestique ayant une borne d'accès radio de type WiFi™, l'invention ne saurait être limitée à ce seul type de liaison sans fil et une liaison avec le terminal mobile de communication mettant en oeuvre un protocole de type bluethooth™ est tout aussi envisageable. De même, il est possible de réduire la passerelle domestique à son seul moyen d'interconnexion (modem ADSL, SDSL, xDSL ou autre modem) équipé d'une borne d'accès radio ou encore à un simple dispositif de commande pourvu de moyens de détection radio et de moyens de commande pour l'émission des commandes.

En complément, les fonctionnalités de l'application distante, formant dispositif de gestion et celles de la passerelle, formant dispositif de commande, peuvent être mises en oeuvre dans un seul et même dispositif. Dans ce cas le réseau étendu 12 n'est pas nécessaire à la mise en oeuvre de l'invention. Cependant la présence d'un tel réseau offre des avantages. En particulier, le dispositif de gestion ou serveur applicatif 42 devient alors accessible à travers un réseau WAN (Internet notamment), ce qui offre à l'utilisateur la possibilité de se connecter à ce serveur afin de paramétrer le mode de commande des équipements.

Il est clair également que la présence du réseau local 14 est utilisable pour la mise en oeuvre d'une liaison de communication à partir du terminal mobile lorsque celui-ci est dans le périmètre radio de la passerelle. Le réseau 14 est également utilisable pour la transmission de commandes lorsqu'un équipement au moins est raccordable à ce réseau local et vu comme un terminal IP. Cependant, il est envisageable de n'utiliser, pour l'envoi des commandes, que des signaux de télécommande (par exemple de type infrarouge) qui eux sont transmis indépendamment de tout réseau (réseau local 14 ou réseau de distribution d'électricité). Dans ce cas la présence du réseau local n'est pas nécessaire à la mise en oeuvre de l'invention, seuls les moyens de détection radio étant requis.

Des exemples d'usages possibles de l'invention sont les suivants: Quand l'utilisateur rentre chez lui, l'alarme de la maison et la Webcam de surveillance sont désactivées, l'éclairage s'allume automatiquement (selon des conditions supplémentaires de plages horaires, ou d'une valeur reçue du capteur de lumière), les stores s'ouvrent, le répondeur téléphonique peut énoncer ses messages, ... L'utilisateur aura paramétré les services souhaités lors de la phase d'initialisation ou ultérieurement par l'intermédiaire du serveur applicatif. A l'inverse, le départ de la personne peut commander automatiquement la mise en route de l'alarme, de la Webcam de surveillance, l'extinction des éclairages, la fermeture des volets roulants, la mise en régime économique du chauffage, ou l'extinction du four électrique si celle-ci avait été omise.

## Revendications

1. Procédé de commande à distance d'au moins un équipement (22-36), comportant les étapes suivantes :
- détection de l'arrivée ou du départ d'un terminal mobile de communication (16) d'un utilisateur dans un périmètre de détection radio (20) d'un dispositif de commande (10),
- envoi par le dispositif de commande (10) d'une information pour informer un dispositif de gestion (42) de ladite détection, et **caractérisé par** les étapes:
- réception en retour par le dispositif de commande (10) d'au moins une commande à envoyer et d'au moins un identifiant d'un équipement (22-36) auquel ladite au moins une commande est à envoyer, et
- envoi par le dispositif de commande (10) de ladite au moins une commande à au moins un équipement (22-36) identifié par ledit au moins un identifiant.

2. Procédé selon la revendication 1, **caractérisé en ce que** ladite commande est envoyée audit équipement à travers un réseau local de télécommunication auquel est connecté ledit équipement, à travers un réseau de distribution d'électricité alimentant ledit équipement ou au moyen d'un signal de télécommande transmis indépendamment d'un réseau.

3. Procédé selon l'une des revendications 1 ou 2 dans lequel ladite information comprend un identifiant dudit terminal mobile.

4. Procédé selon l'une quelconque des revendications 1 à 3, dans lequel
- le dispositif de commande reçoit, en provenance d'un équipement, des données résultant d'une mesure ou d'une détection effectuée par l'équipement concerné, et
- le dispositif de commande transmet les données reçues au dispositif de gestion,
ladite commande n'étant envoyée à l'équipement qu'en cas de réalisation d'au moins une condition relative aux données reçues.

5. Procédé selon la revendication 3 ou 4, dans lequel le dispositif de commande convertit la commande reçue dudit dispositif de gestion en un signal de télécommande destiné à être envoyé audit équipement.

6. Dispositif de commande à distance (10) d'au moins un équipement (22-36), comporte:
- des moyens (54) de détection de l'arrivée ou du départ d'un terminal mobile de communication (16) d'un utilisateur dans un périmètre de détection radio (20) du dispositif de commande,
- des moyens pour envoyer une information pour informer un dispositif de gestion (42) de ladite détection, et **caractérisé par**:
- des moyens de réception pour recevoir en retour au moins une commande à envoyer et au moins un identifiant d'un équipement auquel ladite au moins une commande est à envoyer, et
- des moyens (56 ; 72) de commande pour envoyer ladite au moins une commande à au moins un équipement identifié par ledit au moins un identifiant.

7. Dispositif de gestion (42) pour la commande à distance d'au moins un équipement (22-36) comprend
- des moyens (54) pour recevoir, en provenance d'un dispositif de commande, une information relative à une détection de l'arrivée ou du départ d'un terminal mobile de communication (16) d'un utilisateur dans un périmètre de détection radio (20) du dispositif de commande, et **caractérisé par**:
- des moyens (56 ; 72) d'émission pour envoyer au dispositif de commande au moins une commande destinée à être transmise par le dispositif de commande à l'un desdits au moins un équipement, les moyens d'émission étant conçus pour être activés suite à la réception de ladite information.

8. Système de commande à distance d'équipement comprenant un dispositif de commande selon la revendication 6 et un dispositif de gestion selon la revendication 7.

9. Système selon la revendication 8, dans lequel le dispositif de commande fait partie d'un dispositif d'interconnexion entre un premier réseau (12) et un deuxième réseau (14), le premier réseau étant utilisé pour établir une liaison de communication entre le dispositif de commande et le dispositif de gestion.

10. Système selon la revendication 9, dans lequel le deuxième réseau est utilisé pour établir une liaison de communication à partir du terminal mobile lorsque celui-ci est dans le périmètre de détection radio du dispositif de commande.

11. Programme informatique téléchargeable depuis un réseau de communication et/ou stocké sur un support d'enregistrement lisible par ordinateur et/ou exécutable par un microprocesseur, **caractérisé en ce qu'**il comprend des instructions de code pour l'exécution des étapes du procédé de commande à distance d'au moins un équipement selon l'une quelconque des revendications 1 à 5.

12. Support d'enregistrement sur lequel est stocké le programme informatique selon la revendication 11.

## Claims

1. Method for remotely controlling at least one appliance (22-36), **characterized in that** it comprises the following steps:
- detection of the arrival or departure of a mobile communication terminal (16) of a user in a perimeter of radio detection (20) of a control device (10),
- sending by the control device (10) of a piece of information to inform a management device (42) of said detection, and **characterized by** the steps:
- reception in return by the control device (10) of at least one command to be dispatched and of at least one identifier of an appliance (22-36) to which said at least one command is to be dispatched, and
- dispatching by the control device (10) of said at least one command to at least one appliance (22-36) identified by said at least one identifier.

2. Method according to Claim 1, **characterized in that** said command is dispatched to said appliance through a local telecommunication network to which said appliance is connected, through an electricity distribution network supplying said appliance or by means of a remote control signal transmitted independently of a network.

3. Method according to either of Claims 1 and 2, in which said piece of information comprises an identifier of said mobile terminal.

4. Method according to any one of Claims 1 to 3, in which
- the control device receives, from an appliance, data resulting from a measurement or from a detection performed by the appliance concerned, and
- the control device transmits the data received to the management device,
said command being dispatched to the appliance only in the case of satisfaction of at least one condition relating to the data received.

5. Method according to Claim 3 or 4, in which the control device converts the command received from said management device into a remote control signal intended to be dispatched to said appliance.

6. Device (10) for remotely controlling at least one appliance (22-36), **characterized in that** it comprises:
- means (54) for detecting the arrival or departure of a mobile communication terminal (16) of a user in a perimeter of radio detection (20) of the control device,
- means for sending a piece of information to inform a management device (42) of said detection, and **characterized by**:
- reception means for receiving in return at least one command to be dispatched and at least one identifier of an appliance to which said at least one command is to be dispatched, and
- control means (56; 72) for dispatching said at least one command to at least one appliance identified by said at least one identifier.

7. Management device (42) for the remote control of at least one appliance (22-36), **characterized in that** it comprises
- means (54) for receiving, from a control device, a piece of information relating to a detection of the arrival or departure of a mobile communication terminal (16) of a user in a perimeter of radio detection (20) of the control device, and **characterized by**:
- sending means (56; 72) for dispatching to the control device at least one command intended to be transmitted by the control device to one of said at least one appliance, the sending means being designed to be activated following the receipt of said piece of information.

8. System for remotely controlling appliances, comprising a control device according to Claim 6 and a management device according to Claim 7.

9. System according to Claim 8, in which the control device forms part of a device for interconnection between a first network (12) and a second network (14), the first network being used to establish a communication link between the control device and the management device.

10. System according to Claim 9, in which the second network is used to establish a communication link from the mobile terminal when the latter is in the perimeter of radio detection of the control device.

11. Computer program downloadable from a communication network and/or stored on a recording medium readable by computer and/or executable by a microprocessor, **characterized in that** it comprises code instructions for the execution of the steps of the method for remotely controlling at least one appliance according to any one of Claims 1 to 5.

12. Recording medium on which the computer program according to Claim 11 is stored.

## Patentansprüche

1. Verfahren zur Fernsteuerung mindestens eines Geräts (22-36), **dadurch gekennzeichnet, dass** es die folgenden Schritte aufweist:
- Erfassen des Eintritts in ein oder des Austritts aus einem Funkerfassungsgebiet (20) einer Steuervorrichtung (10) durch ein mobiles Kommunikationsendgerät (16) eines Benutzers,
- Senden einer Information durch die Steuervorrichtung (10), um eine Verwaltungsvorrichtung (42) über die Erfassung zu informieren;
und **gekennzeichnet durch** die Schritte:
- des Rückempfangs **durch** die Steuervorrichtung (10) mindestens eines zu sendenden Befehls und mindestens einer Kennung eines Geräts (22-36), an das der mindestens eine Befehl zu senden ist, und
- des Sendens des mindestens einen Befehls **durch** die Steuervorrichtung (10) an mindestens ein Gerät (22-36), das **durch** die mindestens eine Kennung identifiziert wird.

2. Verfahren nach Anspruch 1, **dadurch gekennzeichnet, dass** der Befehl an das Gerät über ein lokales Telekommunikationsnetz, mit dem das Gerät verbunden ist, über ein das Gerät versorgendes Stromversorgungsnetz, oder mittels eines Fernsteuerungssignals gesendet wird, das unabhängig von einem Netzwerk übertragen wird.

3. Verfahren nach einem der Ansprüche 1 oder 2, bei dem die Information eine Kennung des mobilen Endgeräts enthält.

4. Verfahren nach einem der Ansprüche 1 bis 3, bei dem
- die Steuervorrichtung von einem Gerät Daten empfängt, die aus einer Messung oder einer Erfassung hervorgehen, die vom betroffenen Gerät durchgeführt wird, und
- die Steuervorrichtung die empfangenen Daten an die Verwaltungsvorrichtung überträgt,
wobei der Befehl nur an das Gerät übertragen wird, wenn mindestens eine Bedingung bezüglich der empfangenen Daten erfüllt ist.

5. Verfahren nach Anspruch 3 oder 4, bei dem die Steuervorrichtung den von der Verwaltungsvorrichtung empfangenen Befehl in ein Fernsteuerungssignal umwandelt, das dazu bestimmt ist, an das Gerät gesendet zu werden.

6. Vorrichtung zur Fernsteuerung (10) mindestens eines Geräts (22-36), **dadurch gekennzeichnet, dass** sie aufweist:
- Einrichtungen (54) zur Erfassung des Eintritts in oder des Austritts aus einem Funkerfassungsgebiet (20) der Steuervorrichtung durch ein mobiles Kommunikationsendgerät (16) eines Benutzers,
- Einrichtungen zum Senden einer Information, um eine Verwaltungsvorrichtung (42) über die Erfassung zu informieren, und **gekennzeichnet durch**:
- Empfangseinrichtungen, um mindestens einen zu sendenden Befehl und mindestens eine Kennung eines Geräts, an das mindestens ein Befehl gesendet werden soll, zurück zu empfangen, und
- Steuereinrichtungen (56; 72), um den mindestens einen Befehl an mindestens ein Gerät zu senden, das durch die mindestens eine Kennung identifiziert wird.

7. Verwaltungsvorrichtung (42) zur Fernsteuerung mindestens eines Geräts (22-36), **dadurch gekennzeichnet, dass** sie enthält
- Einrichtungen (54), um von einer Steuervorrichtung eine Information bezüglich einer Erfassung des Eintritts in oder des Austritts aus einem Funkerfassungsgebiet (20) der Steuervorrichtung durch ein mobiles Kommunikationsendgerät (16) eines Benutzers zu empfangen, und **gekennzeichnet durch**:
- Sendeeinrichtungen (56; 72) zum Senden mindestens eines Befehls an die Steuervorrichtung, der dazu bestimmt ist, von der Steuervorrichtung an eines der mindestens einen Geräte übertragen zu werden, wobei die Sendeeinrichtungen konzipiert sind, um nach dem Empfang der Information aktiviert zu werden.

8. System zur Gerätefernsteuerung, das eine Steuervorrichtung nach Anspruch 6 und eine Verwaltungsvorrichtung nach Anspruch 7 enthält.

9. System nach Anspruch 8, bei dem die Steuervorrichtung Teil einer Verbindungsvorrichtung zwischen einem ersten Netzwerk (12) und einem zweiten Netzwerk (14) ist, wobei das erste Netzwerk verwendet wird, um eine Kommunikationsverbindung zwischen der Steuervorrichtung und der Verwaltungsvorrichtung aufzubauen.

10. System nach Anspruch 9, bei dem das zweite Netzwerk verwendet wird, um eine Kommunikationsverbindung ausgehend von dem mobilen Endgerät aufzubauen, wenn dieses sich im Funkerfassungsgebiet der Steuervorrichtung befindet.

11. EDV-Programm, das von einem Telekommunikationsnetz heruntergeladen und/oder auf einem computerlesbaren Aufzeichnungsträger gespeichert und/oder von einem Mikroprozessor ausgeführt werden kann, **dadurch gekennzeichnet, dass** es Codeanweisungen für die Ausführung der Schritte des Fernsteuerungsverfahrens mindestens eines Geräts nach einem der Ansprüche 1 bis 5 enthält.

12. Aufzeichnungsträger, auf dem das EDV-Programm nach Anspruch 11 gespeichert ist.
